## Europäisches Patentamt

## European Patent Office

## Office européen des brevets

(19)

(11) Veröffentlichungsnummer: **0 074 657**
**B1**

(12) # EUROPÄISCHE PATENTSCHRIFT

(45) Veröffentlichungstag der Patentschrift:
27.12.84

(21) Anmeldenummer: **82108440.7**

(22) Anmeldetag: **13.09.82**

(51) Int. Cl.³: **H 04 L 1/18, H 04 K 3/00**

(54) **Verfahren zur gesicherten Übertragung von digitalen Signalen.**

(30) Priorität: **15.09.81 DE 3136461**

(43) Veröffentlichungstag der Anmeldung:
**23.03.83 Patentblatt 83/12**

(45) Bekanntmachung des Hinweises auf die Patenterteilung:
**27.12.84 Patentblatt 84/52**

(84) Benannte Vertragsstaaten:
**AT CH DE FR GB IT LI NL SE**

(56) Entgegenhaltungen:
**AT - B - 360 090**
**DE - A - 2 848 205**
**FR - A - 2 362 537**

**L. WIESNER "Fernschreib- und Datenübertragung über Kurzwelle" Grundlagen und Netze, 2. durchgesehene Auflage, 1976 SIEMENS AKTIENGESELLSCHAFT, Berlin und München, DE Seiten 97-100, Seiten 105-117, Seiten 126, 127, 148, 149**

(73) Patentinhaber: **Siemens Aktiengesellschaft, Berlin und München Wittelsbacherplatz 2, D-8000 München 2 (DE)**

(72) Erfinder: **Hanni, Manfred, Ing.grad., Gottschalkstrasse 3, D-8031 Puchheim (DE)**
Erfinder: **Brusch, Josef, Ing.grad., Fasanenstrasse 22, D-8025 Unterhaching (DE)**

## Beschreibung

Die Erfindung bezieht sich auf ein Verfahren zur gesicherten Übertragung von digitalen Signalen, insbesondere Daten über Kurzwellen, bei dem die mit einer Datensicherung versehenen, verschlüsselten Signale blockweise (Burst) von einer Sende- zu einer Empfangsstation übertragen werden und von der Empfangsstation vor Aussenden eines weiteren Bursts ein Quittungssignal zur Sendestation rückübertragen wird (Automatic Request).

Verfahren dieser Art sind beispielsweise in dem Buch von L. Wiesner „Fernschreib- und Datenübertragung über Kurzwelle", 3. Aufl., 1980, S. 105 bis 114 und 184 bis 188 beschrieben. Die blockweise Übertragung mit Quittierung in Verbindung mit einer Datensicherung ermöglicht es, empfangsseitig leicht gestörte Bursts hinsichtlich ihres Informationsinhaltes von Übertragungsfehlern zu befreien. Darüber hinaus kann nach Bedarf der gleiche Block noch einmal ausgesendet werden, wenn über die Rückantwort auf der Sendestation erkannt wird, dass der Informationsblock auf der Empfangsseite in nicht korrigierbarer Weise fehlerhaft angekommen ist. Weiterhin ermöglicht die Verschlüsselung eine abhörsichere Übertragung.

Diese Art der gesicherten Übertragung reicht jedoch dann nicht mehr aus, wenn mit gezielten Störungen gerechnet werden muss. Mit solchen gezielten Störungen ist jedenfalls bei Funksystemen für taktischen Einsatz immer zu rechnen. Zwar machen solche Funksysteme in der Regel von einem gegenüber dem Kurzwellenbereich wesentlichen höheren Frequenzbereich Gebrauch. In der Praxis ist jedoch die Benutzung des Kurzwellenbereichs aus Gründen ungünstiger Gelände- und/oder Entfernungsverhältnisse mitunter unumgänglich. In diesen Fällen ist es deshalb notwendig, besondere Massnahmen zur Sicherung der Nachrichtenübertragung in diesem Bereich zu treffen.

Für eine sichere Kurzwellenübertragung mit einfachen Mitteln ist die Datenrate auf etwa 200 bit/s begrenzt. Als minimale Informationsmenge werden 3 byte, entsprechend 24 bit, angesehen. Unter Berücksichtigung der zusätzlichen Datensicherung ergeben sich hier Mindestlängen für die die Informationspakete darstellenden Bursts > 200 ms. Wenn dem Störer die Frequenz der Verbindung bekannt ist, ist eine solche Burstlänge bereits im Hinblick auf kommende Technologien zu hoch. Auch erweist sich die gegenseitige, relativ lange Einphasprozedur zwischen zwei miteinander in Verbindung tretenden Stationen vor der eigentlichen Übertragung als ungemein störanfällig. Gelingt es einem Störer durch gezielte Massnahmen den Verbindungsaufbau zu stören, dann wird eine Nachrichtenübertragung auf diese Weise von vornherein unmöglich.

Der Erfindung liegt die Aufgabe zugrunde, für eine digitale Nachrichtenübertragung, insbesondere auf Kurzwellen, eine Lösung anzugeben, die neben ihrer Abhörsicherheit eine ausreichend hohe Resistenz gegen gezielte Störung aufweist.

Ausgehend von einem Verfahren zur gesicherten Übertragung von digitalen Signalen, insbesondere Daten, über Kurzwellen, wird diese Aufgabe gemäss der Erfindung durch das Zusammenwirken der im Kennzeichen des Anspruchs 1 angegebenen Massnahmen gelöst.

Bei der Erfindung wird von der Erkenntnis ausgegangen, dass bei Verwendung hochgenauer Stationsquarzuhren die Zeit für den Verbindungsaufbau im Zusammenhang mit einer Zeitzeichenübertragung sehr kurz gehalten werden kann. Zusätzlich wird eine gezielte Störung der Bursts durch ständiges Ändern der Radiofrequenz von einem Burst zum nächsten wirksam verhindert. Durch Anwendung des Frequenzspringens können zwar die benützten Frequenzen nicht reserviert oder vorher auf Störungsfreiheit geprüft werden. Auch das Fadingverhalten ist nicht vorhersagbar. Durch die gleichzeitige Anwendung eines Frequenzspringens in Verbindung mit automatischer Rückmeldung in Form eines Quittungssignals (ARQ) lässt sich jedoch trotzdem eine wenn auch langsame Datenübertragung sicher durchführen. Um das Erkennen des Quittungssignals für einen aktiven Störer wesentlich zu erschweren, wird dieses ebenfalls lediglich in verschlüsselter Form übertragen.

Ist die zu übertragende Signalinformation ihrem Umfang nach so gering, dass sie jeweils in einem einzigen Burst übertragen werden kann, so ist es wenig sinnvoll, einem solchen Einzelburst einen Rufburst voranzustellen. Ein spezieller Ruf ist auch insofern nicht erforderlich, als die im Zusammenwirken mit der eingestellten Rufnummer erwürfelte Schlüsselfolge Selektivrufeigenschaften aufweist. Der Ruf ist gleichsam über die Verschlüsselung in den Burst integriert. In vorteilhafter Weise besteht deshalb jeder Einzelburst aus einem verschlüsselten Informationsteil, einem ebenfalls verschlüsselten Fehlersicherungteil und einem diesen beiden Teilen vorangestellten, unverschlüsselten Zeitzeichenteil, das bei der empfangsseitigen Auswertung in einem Zeitzeichenkorrelator zur Einstellung der richtigen Empfangsphase herangezogen wird.

Muss die zu übertragende Signalinformation auf eine Vielzahl von aufeinanderfolgenden Bursts aufgeteilt werden, dann ist es sinnvoll, den zu übertragenden, jeweils aus einem verschlüsselten Informationsteil und aus einem verschlüsselten Fehlersicherungteil bestehenden Informationsbursts ein aus einem Zeitzeichen und aus einer den Selektivruf darstellenden Schlüsselfolge bestehenden Rufburst voranzustellen, der nach Empfang und Erkennen des Rufs auf der empfangenden Station zur Aussendung des Quittungssignals in einem fest vorgegebenen, auf das empfangene Zeitzeichen bezogenen Zeitabstand ausgesendet wird. Hierbei wird aus der Empfangszeit dieses den Rufburst quittierenden Quittungssignals auf der rufenden Station ein enges Zeitfenster zum Empfang weiterer Quittungssignale im Zuge der sich daran anschliessenden Übertragung von Informationsbursts gesetzt. Auf diese Weise wird in ausserordentlich vorteilhafter Weise erreicht, dass die Wahrscheinlichkeit der Erkennung des Quittungssignals trotz seiner Verschlüsselung ausreichend gross ist. Das Zeitfenster setzt nämlich die Wahrscheinlichkeit für eine Nachbildung des Quittungssignals durch Rauschen wesentlich herab.

Während bei der Übertragung von Einzelbursts das ihm beigegebene Zeitzeichen eine burstindividuelle Korrektur der empfangsseitigen Taktphase ermöglicht, ist dies bei der oben erwähnten Übertragung von einer eine Vielzahl von Informationsbursts umfassenden Signalinformation nicht gegeben. Die mittels des im Rufburst übertragenen Zeitzeichens herbeigeführte Synchronisation kann nicht verhindern, dass durch Laufzeitschwankungen während der Übertragung der auf den Rufburst folgenden Informationsbursts Phasenschwankungen über Laufzeitänderungen auftreten können. Solche Laufzeitschwankungen können jedoch bis zu einer Änderung in der Grössenordnung von ½ bit vorteilhafterweise dadurch beherrscht werden, dass empfangsseitig vor der Entschlüsselung jedes ankommende Bit eines Informationsbursts in mehreren Phasen, beispielsweise acht Phasen, in einen Matrixspeicher eingeschrieben wird. Über eine Ermittlung derjenigen Bitphasenspalten, die sich durch eine kleinste Anzahl von Bitsprungübergängen auszeichnen, wird die empfangsseitige Taktphase für jeden ankommenden Informationsburst für die Mitte dieses Bitphasenspaltenbereiches festgelegt und anschliessend die dieser Taktphase zugeordnete Bitphasenspalte entschlüsselt und der Fehlersicherung zugeführt.

Unter Zuhilfenahme eines solchen Matrixspeichers lassen sich auch ½ bit übersteigende Laufzeitschwankungen dadurch beherrschen, dass die in mehreren Phasen eingeschriebenen, ankommenden Bits eines Informationsbursts nach ihren Bitphasenspalten geordnet entschlüsselt und der Fehlersicherung zugeführt werden. Für die Festlegung der empfangsseitigen Taktphase wird dann eine vom Empfänger zur Informationsabgabe schliesslich auch angenommene Bitphasenspalte ermittelt, die fehlerfrei bzw. fehlerkorrigierbar ist.

Um auch zu verhindern, dass von einem Störer im Rhythmus der aufeinanderfolgenden Bursts Zeitzeichen oder irgendwelche andere Signalinformation imitiert werden können, was einer unerwünschten Erhöhung der Fehlalarmrate gleichkommen würde, wird in Weiterbildung der Erfindung vorgeschlagen, das Zeitintervall zwischen zwei aufeinanderfolgenden Sendezeitpunkten für die Aussendung eines Bursts in vorgegebenen Grenzen pseudozufällig mit Hilfe der Schlüsseleinrichtung zu ändern.

Anhand von in der Zeichnung dargestellten Ausführungsbeispielen soll die Erfindung im folgenden noch näher erläutert werden. In der Zeichnung bedeuten:

Fig. 1 das Blockschaltbild einer ersten, nach dem Verfahren nach der Erfindung arbeitenden Sende-Empfangsstation,

Fig. 2 ein die Betriebsweise der Sende-Empfangsstation nach Fig. 1 näher erläuterndes Zeitdiagramm,

Fig. 3 das Blockschaltbild einer weiteren nach dem Verfahren nach der Erfindung arbeitenden Sende-Empfangsstation,

Fig. 4 ein den Ablauf eines Verbindungsaufbaus zwischen zwei Stationen nach Fig. 3 erläuterndes Zeitdiagramm,

Fig. 5 ein weiteres den Betriebsablauf zweier Stationen nach Fig. 3 erläuterndes Zeitdiagramm,

Fig. 6 eine die Arbeitsweise des Matrixspeichers der in Fig. 3 dargestellten Station näher erläuternde Tabelle.

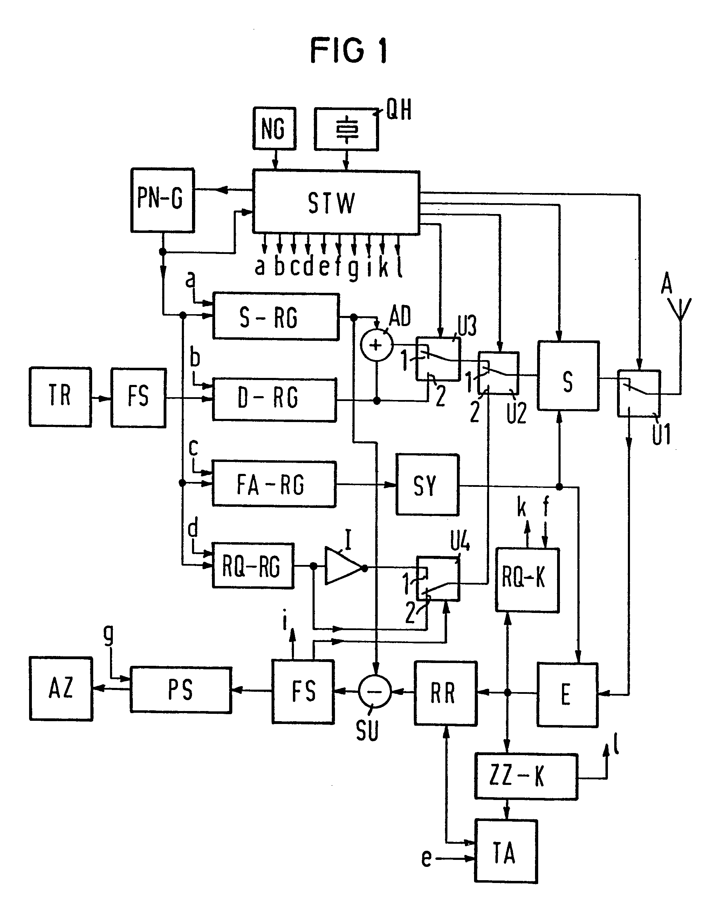

Die Sende-Empfangsstation nach Fig. 1 für Einzelsignalbetrieb weist eine Sende-Empfangsantenne A auf, die über einen Sende-Empfangsumschalter U1 wahlweise mit dem eigentlichen Sender S bzw. dem eigentlichen Empfänger E verbindbar ist. Die Sende-Empfangsstation weist beispielsweise ein durch einen Mikroprozessor realisiertes Steuerwerk STW auf, das auch mit der hochgenauen digitalen Quarzuhr QH und dem Rufnummerngeber NG zusammenarbeitet. Das Steuerwerk STW hat eine Reihe von Taktausgängen a, b, c, d, e, f und g sowie Steuerinformationseingänge i, k und l, deren Verbindungen zu den übrigen noch zu beschreibenden Blöcken lediglich durch kurze Pfeile und Angabe der erwähnten Buchstabenbezeichnungen angedeutet sind. Das Steuerwerk STW arbeitet weiter mit dem eine Schlüsselfolge liefernden Pseudozufallsgenerator PN-G zusammen, der seine ausgangsseitige Pulsfolge einerseits dem Steuerwerk STW zur Verfügung stellt und andererseits vom Steuerwerk über eine weitere Verbindungsleitung vor Beginn einer Burstübertragung in eine von der Uhrzeit und der Einstellung des Rufnummerngebers NG abhängige Startlage eingestellt wird. Mit anderen Worten wird jeweils vor Beginn eines Sendefensters für einen Burst auf diese Weise anhand der Uhrzeit und der im Rufnummerngeber NG eingestellten Teilnehmernummer eine Schlüsselfolge errechnet. Aufgrund der rufselektiven Eigenschaften der in Form der verschlüsselten Information übertragenen Schlüsselfolge kann diese nur auf der gerufenen Station entschlüsselt werden, wodurch sichergestellt ist, dass nur, wer zur gleichen Zeit den gleichen Tageschlüssel und die gleiche Rufnummer eingestellt hat, den Ruf auffassen kann.

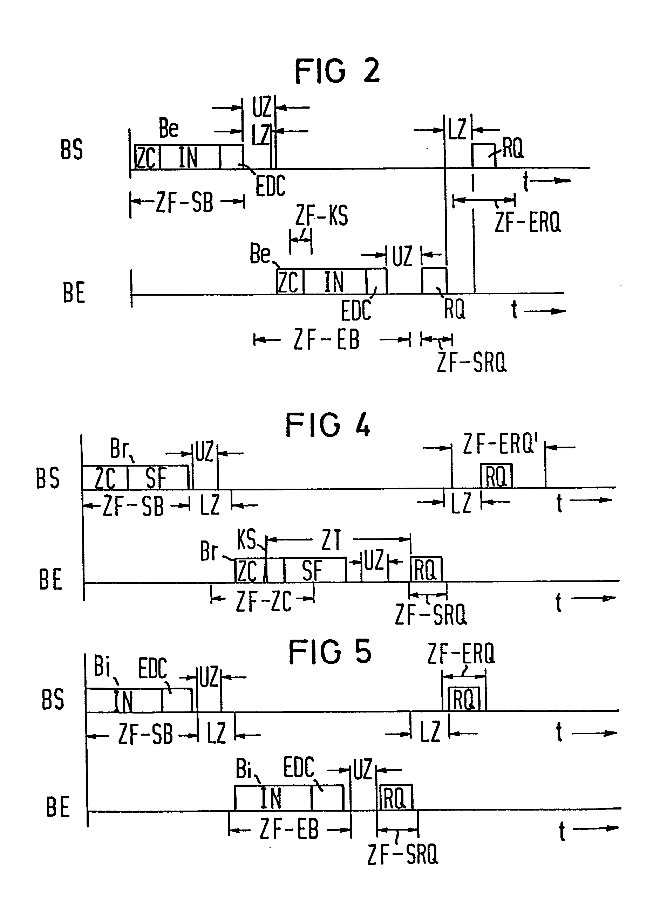

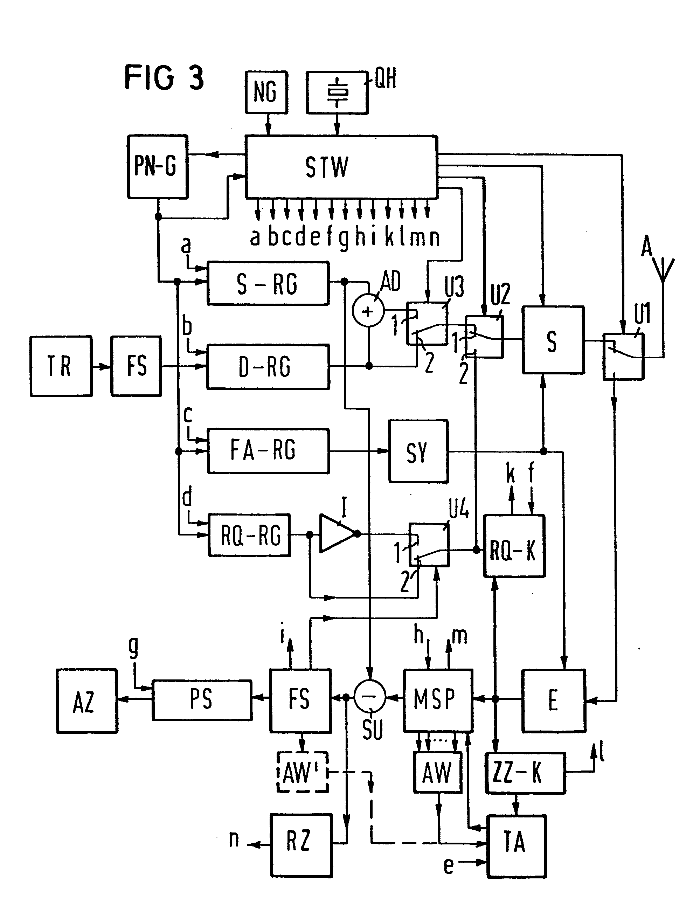

Unter der Annahme, dass jeder in Fig. 2 dargestellte Burst Be hinsichtlich seines Informations- und Fehlersicherungsteils IN und ECD 36 bit zu verschlüsseln hat, werden 36 bit vom Ausgang des Pseudozufallsgenerators PN-G in das Schlüsselregister S-RG, 7 bit in das Quittungssignalregister RQ-RG und 16 bis 30 bit (je nach Anwendung) in das Frequenzadressenregister FA-RG geladen. Die in das Frequenzadressenregister FA-RG geladene Schlüsselteilfolge bestimmt über den Adresseneingang des Synthesizers SY hinweg die Sendefrequenz im Sender S und die Empfangsfrequenz im Empfänger E, die hierbei jeweils miteinander identisch sind. Die zu übertragende Information wird über die Tastatur TR und die Fehlersicherung FS hinweg in das Datenregister DR eingegeben.

Zu Beginn des für die Aussendung eines Bursts Be vorgegebenen Zeitfensters wird zunächst das im Anfangsteil des Datenregisters D-RG fest verdrahtete Zeitzeichen ZC (Fig. 2) in Form eines Barkercodes über den Umschalter U3 und den Umschalter U2 hinweg dem Sender S zugeführt. Dazu liefert das Steuerwerk STW die nötigen Takte und stellt den Umschalter U3 in die Schaltstellung 2. Anschliessend wird der Umschalter U3 wiederum in die in Fig. 1 dargestellte Schaltstellung 1 zurückgestellt und zusätzlich das Schlüsselregister S-RG mit Steuertakten versorgt. Dadurch wird die eigentliche Information mit dem sich daran anschliessenden Fehlersicherungsteil im Verschlüssler AD verschlüsselt und dem Sender S über die beiden Umschalter U3 und U2 ebenfalls zugeführt.

Die sendende und die hiervon entfernte empfangende Station sind miteinander in Langzeitsynchronismus, der durch die hochgenauen Stationsquarzuhren QH aufrechterhalten wird. Mögliche Phasenfehler werden empfangsseitig durch das Ankommen der Zeitzeichen korrigiert.

Bei einem ankommenden Burst an der Sende-Empfangsantenne A ist der Sende-Empfangsumschalter U1 in der durch den unterbrochen gezeichneten Schaltarm angedeuteten Stellung, in der das Signal dem Empfänger E zugeführt wird. Der Empfänger führt über seinen Ausgang das den Burstanfang darstellende Zeitzeichen dem Zeitzeichenkorrelator ZZ-K zu, der während der Dauer des empfangsseitigen hierfür vorgesehenen, in Fig. 2 mit ZF-KS bezeichneten Zeitfensters das Entstehen der Zeitzeichenkorrelationsspitze beobachtet und bei seiner Feststellung über die Taktauswertung TA veranlasst, dass die anschliessenden 36 bit mit der über die Korrelation ermittelten Taktphase in dem dem Empfänger E nachgeschalteten Regenerator RR regeneriert und anschliessend im Entschlüssler SU entschlüsselt werden. Hierzu wird dem Entschlüssler am zweiten Eingang wiederum das im Schlüsselschieberegister S-RG gespeicherte Schlüsselsignal zugeführt. Die dem Entschlüssler SU nachgeschaltete Fehlersicherung FS führt die Information, sofern sie deren Fehlerfreiheit festgestellt hat bzw. einen vorhandenen Fehler korrigieren kann, dem Pufferspeicher PS zu, über den hinweg dann die Information auf eine Anzeigevorrichtung AZ dargestellt wird.

Sofort nach Bearbeitung des letzten Informationsbits schaltet die den Burst empfangende Sende-Empfangsstation über den Sende-Empfangsumschalter U1 von Empfangen auf Senden und quittiert den richtig empfangenen Burst durch Ausgabe des im Quittungssignalregister RQ-RG gespeicherten Quittungssignals über den Umschalter U4 und den Umschalter U2 jeweils in Schaltstellung 2 zum Sender S, der es über den Sende-Empfangsumschalter U1 und die Sende-Empfangsantenne A zur fernen Station aussendet. Wird kein richtig empfangener Burst registriert, dann folgt die Aussendung des Quittungssignals in invertierter Form. Hierzu steuert die Fehlersicherung FS auf der Empfangsseite den Umschalter U4 in die Schaltstellung 1, so dass das aus dem Quittungssignalregister RQ-RG ausgegebene Quittungssignal über den Inverter I zum Sender gelangt.

Die Sende-Empfangsstation, die den Burst ausgesendet hat, schaltet ihren Sende-Empfangsumschalter U1 in die unterbrochen gezeichnete Schaltstellung und damit auf Empfang, sobald der Burst ausgesendet ist. Das ankommende Quittungssignal wird über den Empfänger E hinweg dem empfangsseitigen Quittungssignalkorrelator RQ-K zugeführt, der das Korrelationsergebnis an das Steuerwerk STW weitermeldet. Unabhängig vom Korrelationsergebnis bereitet das Steuerwerk STW die Aussendung eines weiteren Bursts vor. Bei positivem Korrelationsergebnis wird hierzu vorab das Datenregister D-RG mit einer neuen Information geladen, während dies jedoch bei negativem Ergebnis unterbleibt. Auf diese Weise wird dafür gesorgt, dass bei negativem Ergebnis der weitere auszusendende Burst seinem Nutzsignalinhalt nach mit dem vorhergehenden Burst übereinstimmt. Die Änderung der Sendefrequenz sowie des Schlüsselsignals, das für jeden Burst anhand der Uhrzeit neu erwürfelt wird, sowie die sich pseudozufällig in vorgegebenen Grenzen ändernde Sendezeit werden vom Korrelationsergebnis des Quittungssignalkorrelators nicht berührt.

Durch die lediglich zu bestimmten Zeiten zur Verfügung stehenden Takte des Steuerwerks STW an den hierfür zuständigen Registern und sonstigen Baugruppen werden die für die erwünschte Zeitselektion beim Sender und Empfänger erforderlichen Zeitfenster automatisch gesetzt. Das sendeseitige Zeitfenster für das Senden eines Bursts ist in Fig. 2 mit ZF-SB bezeichnet. Der Burst selbst besteht eingangsseitig aus dem Zeitzeichenteil ZC und den sich daran anschliessenden Abschnitten in Gestalt des Informationsteils IN und des Fehlersicherungsteils EDC.

Das obere Diagramm in Fig. 2, das mit BS bezeichnet ist, ist der den Burst Be sendenten Station zugeordnet. Das untere mit BE bezeichnete Zeitdiagramm ist der den Burst Be empfangenden Station zugeordnet. Die den Burst sendende Station wird im Anschluss an das Zeitfenster ZF-SB während des Zeitintervalls UZ von Senden auf Empfangen umgeschaltet. Für den auf der empfangenden Station nach der Laufzeit LZ ankommende Burst ist das Zeitfenster ZF-EB vorgesehen, das jedoch wegen der unbekannten Laufzeit entsprechend grösser gewählt ist als das Zeitfenster ZF-SB.

Auf der den Burst Be empfangenden Station wird im Anschluss an den Empfang des Bursts von Empfangen auf Senden im Zeitintervall UZ umgeschaltet und anschliessend innerhalb des Zeitfensters ZF-SRQ das Quittungssignal RQ ausgesendet. Nach der Laufzeit LZ kommt das Quittungssignal auf der den Burst sendenden Station an und kann dort innerhalb des Zeitfensters ZF-ERQ für den Empfang des Quittungssignals empfangen werden.

Auf der den Burst empfangenden Station ist ferner noch für das Erkennen einer Zeitzeichenkorrelationsspitze das Zeitfenster ZG-KS eingezeichnet, durch das ebenfalls die Möglichkeit eines Fehlalarms wesentlich eingeschränkt wird. Das Zeitfenster für die Zeitzeichenkorrelationsspitze ZF-KS muss hierbei so breit gewählt sein, dass die Zeitzeichenkorrelationsspitze auch unter Berücksichtigung der nicht bekannten Laufzeit sowie maximaler Uhrentoleranz noch eindeutig in diesem Zeitfenster liegt.

Das in Fig. 3 dargestellte Blockschaltbild einer Sende-Empfangsstation für Dauersignalbetrieb unterscheidet sich vom Blockschaltbild nach Fig. 1 lediglich in Details, so dass seine Beschreibung auf diese Details beschränkt werden kann. Das Steuerwerk weist hier einen weiteren Taktausgang h und zwei weitere Steuersignaleingänge m und n auf. Diese zusätzlichen Anschlüsse sind erforderlich für den noch näher zu erläuternden Matrixspeicher MSP, der anstelle des Regenerators RR nach Fig. 1 hier vorhanden ist, sowie für den zusätzlichen Rufzähler RZ.

Durch die hochgenauen Stationsquarzuhren QH ist auch für Dauersignalbetrieb sichergestellt, dass die Schlüsseleinrichtungen zweier Stationen, die miteinander in Verbindung treten wollen, über den Tag hinweg schon so weitgehend synchron sind, dass diese innerhalb eines sogenannten Rendezvous-Fensters eine Verbindung aufbauen können. Ein solches Fenster wird z.B. nur alle 2 s gesetzt. Durch Einstellen der Rufnummer der gewünschten Teilnehmerstation auf der rufenden Station mit Hilfe des Rufnummerngebers NG wird zunächst die Abgabe eines einen Selektivruf darstellenden Rufbursts Br, bestehend aus einem einen Barkercode darstellenden Zeitzeichen ZC und einer Schlüsselfolge SF, auf einer Frequenz ausgesendet, auf der die empfangende Station den Rufburst empfängt. Das Rufzeichen wie auch das einen Barkercode darstellende Zeitzeichen sind im Datenregister D-RG fest verdrahtet. Zu Beginn eines Rufbursts wird zunächst über den Umschalter U3 in Schaltstellung 2 und den Umschalter U2 in Schaltstellung 1 das Zeitzeichen unverschlüsselt dem Sender S unmittelbar zugeführt. Anschliessend wird der Umschalter U3 in die Schaltstellung 1 gebracht und gleichzeitig das beispielsweise aus 36 Einsen bestehende Rufzeichen im Datenregister D-RG und die Schlüsselfolge im Schlüsselregister S-RG dem Verschlüssler AD zugeführt. Das verschlüsselte Rufzeichen wird über den Umschalter U3 und den Umschalter U2 ebenfalls dem Sender S zugeführt, der den gesamten Rufburst über den Sende-Empfangsumschalter U1 und die Antenne A hinweg abstrahlt.

Der auf der entfernten Station ankommende Rufburst Br wird über den Sende-Empfangsumschalter U1 in der unterbrochen gezeichneten Schaltstellung seines Schaltarms dem Empfänger E zugeführt, an den ausgangsseitig der Zeitzeichenkorrelator ZZ-K angeschlossen ist. Die das Erkennen des Zeitzeichens markierende Zeitzeichenkorrelationsspitze wird zur Korrektur der empfangsseitigen Taktphase der Taktauswertung TA zugeführt, die ihrerseits dem Matrixspeicher MSP den Takt in der korrigierten Taktphase zuführt und auf diese Weise den Matrixspeicher MSP dazu veranlasst, das auf das Zeitzeichen folgende Rufzeichen unmittelbar dem Entschlüssler SU zuzuführen. Der Entschlüssler SU entschlüsselt das Rufzeichen mit Hilfe der ihm vom Schlüsselregister S-RG zugeführten Schlüsselfolge und führt diese ausgangsseitig dem Rufzähler RZ zu. Zählt der Rufzähler RZ von den möglichen 36 Einsen wenigstens 32 Einsen, so meldet er dies über den Steuersignaleingang n dem Steuerwerk STW. Das Steuerwerk STW veranlasst seinerseits, dass in einem genau definierten Zeitabstand von der im Zeitzeichenkorrelator ZZ-K auftretenden Zeitzeichenkorrelationsspitze das Quittungssignal aus dem Quittungssignalregister RQ-RG über den Umschalter U4 und den Umschalter U2 in der Schaltstellung 2 dem Sender S zugeführt und über den Sende-Empfangsumschalter U1 und die Antenne A abgestrahlt wird.

Dieser fest vorgegebene Zeitabstand zwischen dem empfangsseitigen Auftreten der Zeitzeichenkorrelationsspitze und dem Aussenden des Quittungssignals RQ ermöglicht es der den Rufburst aussendenden Station, die Funklaufzeit festzustellen und aufgrund dieser Kenntnis nunmehr ein genaues Zeitfenster für den Empfang des auf jeden nunmehr ausgesendeten Informationsburst von der entfernten Station rückgesendeten Quittungssignals zu setzen.

Sobald die den Rufburst sendende Station das den Empfang des Rufes auf der gerufenen Station quittierende Quittungssignal erhalten hat, schaltet das Steuerwerk STW von Anruf auf Betrieb um. Etwa alle 300 ms wird nun für einen neuen Informationsburst eine neue Schlüsselfolge erzeugt. Der aus der verschlüsselten Information einschliesslich Fehlersicherung bestehende Informationsburst wird über den Umschalter U3 in Schaltstellung 1 und den Umschalter U2 dem Sender S zugeführt, der ihn über den Sende-Empfangsumschalter U1 und die Antenne A zur fernen Station abstrahlt.

Auf der fernen Station wird der Informationsburst über den Sende-Empfangsumschalter U1 in der in unterbrochener Linie gezeichneten Schaltstellung seines Schaltarmes wiederum dem Empfänger E zugeführt, der ausgangsseitig den Informationsburst an den bereits erwähnten Matrixspeicher MSP weitergibt. Im Matrixspeicher MSP werden alle ankommenden Informationsbits in beispielsweise acht Phasen in einer Matrix abgespeichert. Anschliessend wird über den Auswerter QW festgestellt, in welchen aufeinanderfolgenden Bitphasenspalten die kleinste Anzahl von Bitsprungübergängen auftreten und dieser Übergang bzw. diese Übergänge dann zur Festlegung der empfangsseitigen Taktphase der Taktauswertung TA gemeldet. Der in einer so ausgezeichneten Bitphasenspalte des Matrixspeichers MSP gespeicherte Informationsburst wird nunmehr in der bereits im Zusammenhang mit der Stationsschaltung nach Fig. 1 beschriebenen Weise weiter verarbeitet.

Wie bereits einleitend darauf hingewiesen wurde, gestattet die Verwendung des Matrixspeichers in dieser Weise den Ausgleich von Laufzeit-

schwankungen bis zu ½ bit. Sollen Laufzeitschwankungen von > ½ bit auch ausgeglichen werden können, so ist dies dadurch möglich, dass die acht Bitphasenspalten nacheinander entschlüsselt und der Fehlersicherung zugeführt werden. Die Festlegung der empfangsseitigen Taktphase erfolgt nunmehr durch eine vom Empfänger zur Informationsabgabe schliesslich auch angenommene Bitphasenspalte, die fehlerfrei bzw. korrigierbar ist. In Fig. 3 ist diese Alternative durch Anordnung des Auswerters AW (unterbrochene Linie) in Verbindung mit der Fehlersicherung FS angedeutet.

Durch die lediglich zu bestimmten Zeiten zur Verfügung stehenden Takte des Steuerwerks STW an den hierfür zuständigen Registern und sonstigen Baugruppen werden auch hier die für die erwünschte Zeitselektion beim Sender und Empfänger erforderlichen Zeitfenster automatisch gesetzt. Zur näheren Erläuterung dieser Zeitfenstertechnik sind entsprechend Fig. 2 in Fig. 4 für die Rufphase und in Fig. 5 für den normalen Betrieb Zeitdiagramme dargestellt.

Wie das Zeitdiagramm BS in Fig. 4 zeigt, wird der aus dem Zeitzeichen ZC und der Schlüsselfolge SF bestehende Rufburst Br innerhalb des Zeitfensters ZF-SB ausgesendet. Im Anschluss daran wird im Zeitintervall UZ von Senden auf Empfang umgeschaltet. Am Ende der Laufzeit LZ kommt der Rufburst Br, wie das Zeitdiagramm BE der Fig. 4 zeigt, auf der fernen Station an, die hierfür ein relativ breites Zeitfenster ZF-ZC für den Empfang des Zeitzeichens ZC gesetzt hat. Erkennt der Zeitzeichenkorrelator ZZ-K nach Fig. 3 das Zeitzeichen durch Auftreten der Zeitzeichenkorrelationsspitze KS, so beginnt von hier aus die Zeit zu laufen, die für den Sendezeitpunkt des Quittungssignals RQ massgeblich ist. Dieses Zeitintervall ist im Diagramm BE mit ZT bezeichnet. Nach Empfang des Rufbursts Br und Erkennen der Zeitzeichenkorrelationsspitze KS schaltet die Station in der Zeit UZ von Empfangen auf Senden um und sendet dann das Quittungssignal RQ innerhalb des Zeitfensters ZF-SRQ. Das Quittungssignal RG kommt nach der Laufzeit LZ auf der den Rufburst sendenden Station an und wird dort, wie das Diagramm BS zeigt, in einem relativ breiten Zeitfenster ZF-ERQ' für den Empfang des Quittungssignals empfangen.

Durch das definierte Aussenden des Quittungssignals in einem vorgegebenen Abstand von der Zeitzeichenkorrelationsspitze KS des empfangenen Zeitzeichens auf der gerufenen Station hat die den Rufburst aussendende Station die Möglichkeit, über den Zeitpunkt des Empfangs des Quittungssignals die Laufzeit zu ermitteln und kann so für die im Rhythmus der nunmehr auszusendenden Informationsbursts Bi von der empfangenden Station rückübertragenen Quittungssignale RQ ein enges Zeitfenster setzen. Dieser Sachverhalt ist in Fig. 5 dargestellt. Der Informationsburst Bi besteht jeweils aus dem Informationsteil IN und der Fehlersicherung EDC. Sobald der Informationsburst auf der fernen Station, wie das Diagramm BE in Fig. 3 zeigt, im Zeitfenster ZF-EB empfangen ist, erfolgt die Umschaltung von Empfangen auf Senden im Zeitintervall UZ und im Anschluss daran das Aussenden des Quittungssignals RQ im Zeitfenster ZF-SRQ. Das nach der Laufzeit LZ auf der den Informationsburst sendenden Station ankommende Quittungssignal RQ wird in dem nunmehr engen Zeitfenster ZF-ERQ empfangen.

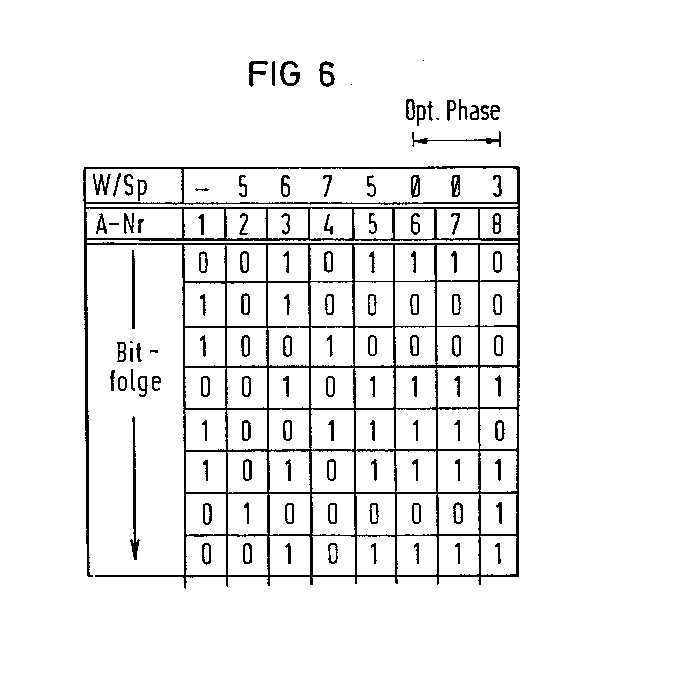

Die in Fig. 6 dargestellte Tabelle, die die Arbeitsweise des Matrixspeichers MSP nach Fig. 3 näher erläutert, geht aus Gründen der Einfachheit davon aus, dass der Informationsburst lediglich 8 bit aufweist, die jeweils in acht Phasen abgetastet werden. Der Informationsburst wird also mit anderen Worten in acht aufeinanderfolgenden Bitphasenspalten gespeichert, wobei das erste ankommende Bit jeweils im obersten Speicherplatz der Tabelle angesiedelt ist und jedes weitere Bit in einem darunter liegenden Speicherplatz. In der Zeile A-Nr sind die acht Bitphasen 1, 2, 3,..., 8 angegeben. Jede binäre Eins ist mit einer 1 und jede binäre Null mit einer 0 bezeichnet. Wie sich leicht erkennen lässt, ergeben sich vom Übergang der Bitphasenspalte 1 zur Bitphasenspalte 2 fünf Bitsprünge und vom Übergang der Bitphasenspalte 2 zur Bitphasenspalte 3 sechs Bitsprünge usw. Das Ergebnis der Bitsprünge von Übergang zu Übergang ist in der Zeile W/SP angegeben. Es zeigt sich, dass bei den Übergängen zwischen den Bitphasenspalten 5 und 6 einerseits und 6 und 7 andererseits keine Bitsprünge auftreten und deshalb die Mitte dieses mit Opt.-Phase bezeichneten Bitphasenspaltenbereichs die gesuchte richtige empfangsseitige Taktphase markiert.

## Patentansprüche

1. Verfahren zur gesicherten Übertragung von digitalen Signalen, insbesondere Daten über Kurzwellen, bei dem die mit einer Datensicherung versehenen verschlüsselten Signale blockweise (Burst) von einer Sende- zu einer Empfangsstation übertragen werden und von der Empfangsstation vor Aussenden eines weiteren Bursts ein Quittungssignal zur Sendestation rückübertragen wird (Automatic Request), dadurch gekennzeichnet, dass die Synchronisation zwischen zwei Stationen in Verbindung mit auf den Stationen angeordneten Quarzuhren hoher Genauigkeit durch ein wenigstens zu Beginn einer Signalübertragung gesendetes Zeitzeichen in Form einer Codefolge mit guten Autokorrelationseigenschaften herbeigeführt wird, das empfangsseitig in einem Zeitzeichenkorrelator (ZZ-K) zur Nachsteuerung der empfangsseitigen Taktphase auswertbar ist, dass ferner die Sende- bzw. Empfangsfrequenz in Frequenzsprungintervallen, die jeweils das Aussenden eines Bursts und den Empfang des Quittungssignals von der fernen Station umfassen, pseudozufällig im Rahmen eines vorgegebenen Frequenzkollektivs geändert und hierbei die Schlüsselfolge für die Verschlüsselung eines Bursts und des zugehörigen Quittungssignals sowie zur Darstellung einer Frequenzadresse anhand der Uhrzeit der Stationsquarzuhr und der Rufnummer der den Burst empfangenden Station für jeden Burst neu errechnet wird, und dass der Burst in Verbindung mit einer einwandfreien empfängerbezogenen Verschlüsselung empfangsseitig gleichzeitig der Adressierung und der Identifizierung dadurch dient, dass nur ein mit dem richtigen Schlüssel entschlüsselter und als fehlerfrei bzw. fehlerkorrigierbar erkannter Burst vom Empfänger angenommen wird.

2. Verfahren nach Anspruch 1 zur Übertragung von jeweils auf einen Burst beschränkten Signalinformationen, dadurch gekennzeichnet, dass jeder Einzelburst (Be) aus einem verschlüsselten Informationsteil (IN), einem verschlüsselten Fehlersicherungsteil (EDC) und einem diesen beiden Teilen vorangestellten, unverschlüsselten Zeitzeichenteil (ZC) besteht.

3. Verfahren nach Anspruch 1 zur Übertragung von einer eine Vielzahl von Bursts umfassenden Signalinformation, dadurch gekennzeichnet, dass den zu übertragenden, jeweils aus einem verschlüsselten Informationsteil (IN) und einem verschlüsselten Fehlersicherungsteil (EDC) bestehenden Informationsbursts (Bi) ein aus einem Zeitzeichen (ZC) und aus einer den Selektivruf darstellenden Schlüsselfolge (SF) bestehender Rufburst (Br) vorangestellt wird, der nach Empfang und Erkennen des Rufs auf der empfangenden Station zur Aussendung des Quittungssignals in einem fest vorgegebenen, auf das empfangene Zeitzeichen bezogenen Zeitabstand (ZT) ausgesendet wird, und dass aus der Empfangszeit dieses den Rufburst (Br) quittierenden Quittungssignals (QR) auf der rufenden Station ein enges Zeitfenster (ZF-ERQ) zum Empfang weiterer Quittungssignale im Zuge der sich daran anschliessenden Übertragung von Informationsbursts gesetzt wird.

4. Verfahren nach den Ansprüchen 1 und 3, dadurch gekennzeichnet, dass empfangsseitig vor der Entschlüsselung jedes ankommende Bit eines Informationsbursts (Bi) in mehreren Phasen, beispielsweise acht Phasen, in einen Matrixspeicher (MSP) eingeschrieben wird, dass ferner über eine Ermittlung derjenigen Bitphasenspalten, die sich durch eine kleinste Anzahl von Bitsprungübergängen auszeichnen, die empfangsseitige Taktphase für die Mitte dieses Bitphasenspaltenbereiches festgelegt wird und dass anschliessend die dieser Taktphase zugeordnete Bitphasenspalte entschlüsselt und der Fehlersicherung (FS) zugeführt wird.

5. Verfahren nach den Ansprüchen 1 und 3, dadurch gekennzeichnet, dass empfangsseitig jedes ankommende Bit eines Informationsbursts (Bi) zunächst in mehreren Phasen, beispielsweise acht Phasen, in einen Matrixspeicher (MSP) eingeschrieben und anschliessend jede Bitphasenspalte entschlüsselt und der Fehlersicherung (FS) zugeführt wird und dass für die Festlegung der empfangsseitigen Taktphase eine vom Empfänger zur Informationsabgabe schliesslich auch angenommene Bitphasenspalte ermittelt wird, die fehlerfrei bzw. fehlerkorrigierbar ist.

6. Verfahren nach einem der vorhergehenden Ansprüche, dadurch gekennzeichnet, dass das Zeitintervall zwischen zwei aufeinanderfolgenden Sendezeitpunkten für die Aussendung eines Bursts in vorgegebenen Grenzen pseudozufällig mit Hilfe der Schlüsseleinrichtung geändert wird.

## Claims

1. A method for the protected transmission of digital signals, in particular data *via* short waves, wherein the coded signals provided with a data protection are transmitted blockwise (burst) from a transmitting to a receiving station and prior to the emission of a further burst of verification signal is transmitted back from the receiving station to the transmitting station (Automatic Request), characterised in that the synchronisation between two stations in association with quartz clocks of high accuracy, which are arranged at the stations, is brought about by a time character in the form of a code sequence with good auto-correlation properties which is transmitted at least at the beginning of a signal transmission and which at the receiving end can be analyzed in a time character correlator (ZZ-K) for automatic timing control of the receiving-end clock pulse phase, that furthermore the transmitting and receiving frequencies are changed in pseudo-random fashion within the scope of a predetermined frequency range in frequency jump intervals, which respectively comprise the emission of a burst and the reception of the verification signal from the remote station, and in this connection the code sequence both for coding a burst and the assigned verification signal and for representing a frequency address by means of the time of the station quartz clock and the call number of the station which receives the burst, is re-calculated for each burst, and that the burst, in connection with an efficient receiver-related coding, simultaneously serves for the addressing and identification at the receiving end in that only one burst, which is decoded by means of the correct code and recognised as being error-free or error-correctable, as the case may be is accepted by the receiver.

2. A method as claimed in Claim 1 for the transmission of items of signal information which are respectively limited to one burst, characterised in that each individual burst (Be) comprises a coded information component (IN), a coded error protection component (EDC) and an uncoded time character component (ZC) which precedes both these components.

3. A method as claimed in Claim 1 for the transmission of an item of signal information which comprises a plurality of bursts, characterised in that information burst (Bi) which is to be transmitted and which comprises a coded information component (IN) and a coded error protection component (EDC), is preceded by a call bust (Br) which comprises a time character (ZC) and a code sequence (SF) constituting the selective call and which following the reception and recognition of the call at the receiving station, for the emission of the verification signal, is emitted in a firmly determined time interval (ZT) which is related to the received time character, and that from the receiving time of this verification signal (QR), which verifies the call burst (Br), a narrow time window (ZF-ERQ) is set at the calling station for receiving further verification signals in the course of the subsequent transmission of information bursts.

4. A method as claimed in Claims 1 and 3, characterised in that the receiving end, prior to the decoding, each incoming bit of an information burst (Bi) is written into a matrix store (MSP) in a plurality of phases, for example eight phases, that furthermore through a determination of those bit phase columns which are distinguished by a smallest number of bit jump transitions, the receiving-end clock pulse phase is determined for the centre of this bit phase column region, and that the bit phase column assigned to the clock pulse phase is subquently decoded and fed to the error protection unit (FS).

5. A method as claimed in Claims 1 and 3, characterised in that at the receiving end each incoming bit of an information burst (Bi) is firstly written into a matrix store (MSP) in a plurality of phases, for example eight phases, and each bit phase column is subsequently decoded and fed to the error protection unit (FS), and that in order to establish the receiving-end clock pulse phase a bit phase column is determined which is finally also accepted by the receiver for the information output and which is error-free or error-correctable, as the case may be.

6. A method as claimed in one of the preceding claims, characterised in that the time interval between two consecutive transmission times for the emission of a burst is changed within predetermined limits in a pseudo-random fashion with the aid of the coding device.

**Revendications**

1. Procédé pour la transmission protégée de signaux numériques, en particulier de données à l'aide d'ondes courtes, dans lequel les signaux codés pourvus d'une sécurité de données sont transmis par blocs (rafale) d'un poste émetteur à un poste récepteur, alors que du poste récepteur est retransmis par le poste récepteur un signal d'accusé de réception avant l'émission d'une autre rafale (demande automatique), caractérisé par le fait que la synchronisation entre deux postes est obtenue, en liaison avec des horloges à quartz de grande précision prévues dans les postes, par un signal de temps émis au moins au début d'une transmission de signaux et se présentant sous la forme d'une boucle de clé, à bonnes propriétés d'autocorrélation, lequel signal de temps est susceptible, du côté réception, d'être évalué dans un corrélateur de signaux de temps (ZZ-K) pour le postréglage de la phase de la cadence du côté réception, qu'en outre la fréquence d'émission et de réception est modifiée, de façon aléatoire dans le cadre d'un collectif prédéterminé de fréquence, en intervalles de sauts de fréquence comportant chacun l'émission d'une rafale et la réception du signal d'accusé de réception du poste éloigné et que, ce faisant, la boucle de clé pour le codage d'une rafale et du signal d'accusé de réception associé, de même que pour la représentation d'une adresse de fréquence, est calculée à nouveau, pour chaque rafale, à l'aide de l'heure de l'horloge à quartz du poste et du numéro d'appel du poste qui reçoit la rafale, et que la rafale, en liaison avec un codage parfait du point de vue du récepteur, sert, du côté réception, en même temps pour l'adressage et l'identification grâce au fait que seule une rafale décodée avec la clé correcte et reconnue comme étant dépourvue d'erreur ou étant susceptible de correction d'une erreur est acceptée par le récepteur.

2. Procédé selon la revendication 1 pour la transmission d'informations de signaux respectivement limités à une rafale, caractérisé par le fait que chaque rafale individuelle (Be) est constituée par une partie d'informations codées (IN), par une partie de sécurité d'erreur codée (EDC) et par une partie de signaux de temps (ZC) décodée et placée à l'avant de ces deux parties.

3. Procédé selon la revendication 1 pour la transmission d'une information de signaux comprenant plusieurs rafales, caractérisé par le fait qu'à l'avant de la rafale d'information (Bi), qui est à transmettre et qui est constituée par une partie information (IN) codée et par une partie de sécurité d'erreur (EDC) codée, est placée une rafale d'appel (Br) constituée par un signe de temps (ZC) et par une boucle de clé (SF) qui représente l'appel sélectif, laquelle rafale d'appel est émise après la réception et l'identification de l'appel sur le poste récepteur en vue de l'émission du signal d'accusé de réception à un intervalle de temps (ZT) prédéterminé de façon fixe et rapporté au signe de temps reçu, et qu'à partir du temps de réception de ce signal d'accusé de réception (QR) qui accuse réception de la rafale d'appel (Br) se trouve activé, au poste appelant, un créneau temporel étroit (ZF-ERQ) pour la réception d'autres signaux d'accusé de réception au cours de la transmission des rafales d'informations qui s'y raccorde.

4. Procédé selon les revendications 1 et 3, caractérisé par le fait que, du côté réception et avant le décodage, chaque bit d'entrée d'une rafale d'information (Bi) est inscrit en plusieurs phases, par exemple en huit phases, dans une mémoire matricielle (MSP), qu'en outre, et par la détermination de celle des colonnes des phases des bits qui se distingue par un plus petit nombre de passage de sauts de bits, on détermine la phase de cadence, côté réception, pour le milieu de cette zone de colonnes de phases de bits, et qu'ensuite la colonne de phases de bits qui est associée à cette phase de cadence est décodée et est appliquée au dispositif de sécurité d'erreur (FS).

5. Procédé selon les revendications 1 et 3, caractérisé par le fait que, du côté réception, chaque bit d'arrivée d'une rafale d'informations (Bi) est d'abord inscrit en plusieurs phases, par exemple huit phases, dans une mémoire matricielle (MSP) et, ensuite, chaque colonne de phases de bits est décodée et est appliquée au dispositif de sécurité d'erreur (FS) et que pour la détermination de la phase de cadence, côté réception, on détermine une colonne de phases de bits qui est finalement supposée être acceptée par le récepteur pour l'émission d'une information, colonne de phases de bits qui est dépourvue d'erreur ou qui est susceptible de correction d'erreur.

6. Procédé selon l'une des revendications précédentes, caractérisé par le fait que l'intervalle de temps entre deux instants d'émission successifs est, pour l'émission d'une rafale dans des limites prédéterminées, modifié de façon aléatoire à l'aide du dispositif de codage.

0 074 657

# FIG 1

11

FIG 2

FIG 4

FIG 5

FIG 3

# FIG 6

Opt. Phase

| W/Sp | – | 5 | 6 | 7 | 5 | 0 | 0 | 3 |
|---|---|---|---|---|---|---|---|---|
| A–Nr | 1 | 2 | 3 | 4 | 5 | 6 | 7 | 8 |
| | 0 | 0 | 1 | 0 | 1 | 1 | 1 | 0 |
| | 1 | 0 | 1 | 0 | 0 | 0 | 0 | 0 |
| Bit – folge | 1 | 0 | 0 | 1 | 0 | 0 | 0 | 0 |
| | 0 | 0 | 1 | 0 | 1 | 1 | 1 | 1 |
| | 1 | 0 | 0 | 1 | 1 | 1 | 1 | 0 |
| | 1 | 0 | 1 | 0 | 1 | 1 | 1 | 1 |
| | 0 | 1 | 0 | 0 | 0 | 0 | 0 | 1 |
| | 0 | 0 | 1 | 0 | 1 | 1 | 1 | 1 |